# Europäisches Patentamt

## European Patent Office

## Office européen des brevets

(11) Veröffentlichungsnummer : **0 027 586**
**B1**

(12) **EUROPÄISCHE PATENTSCHRIFT**

(45) Veröffentlichungstag der Patentschrift :
**22.09.82**

(21) Anmeldenummer : **80106021.1**

(22) Anmeldetag : **04.10.80**

(51) Int. Cl.³ : **B 32 B 27/32, C 09 J 3/00, B 29 D 9/00, B 65 D 65/40**

(54) **Siegelbare Mehrschichtfolie aus Polyolefinen und deren Verwendung als Verpackungsfolien.**

(30) Priorität : **17.10.79 DE 2941909**

(43) Veröffentlichungstag der Anmeldung :
**29.04.81 (Patentblatt 81/17)**

(45) Bekanntmachung des Hinweises auf die Patenterteilung : **22.09.82 Patentblatt 82/38**

(84) Benannte Vertragsstaaten :
**AT BE CH DE FR GB IT LI NL SE**

(56) Entgegenhaltungen :
**BE - A - 624 481**
**DE - A - 1 694 404**
**DE - A - 1 805 886**
**DE - A - 2 223 720**
**GB - A - 810 474**
**US - A - 3 508 944**

(73) Patentinhaber : **Wolff Walsrode Aktiengesellschaft Postfach**
**D-3030 Walsrode (DE)**

(72) Erfinder : **Rosenthal, Heinrich**
**Am Nordsunderberg 5**
**D-3030 Walsrode (DE)**
Erfinder : **Schinkel, Ingo**
**Witternstrasse 14**
**D-3030 Walsrode (DE)**
Erfinder : **Eger, Günther**
**Radwiesen 31**
**D-3030 Walsrode (DE)**

(74) Vertreter : **Gremm, Joachim, Dr. et al**
**Bayer AG c/o Zentralbereich Patente, Marken und Lizenzen**
**D-5090 Leverkusen 1, Bayerwerk (DE)**

Imprimerie Jouve, 18, rue St-Denis, 75001 Paris, France

# 0 027 586

## Siegelbare Mehrschichtfolie aus Polyolefinen und deren Verwendung als Verpackungsfolien

Die vorliegende Erfindung betrifft siegelbare, gereckte Polyolefin-Mehrschichtfolien, die sich besonders als Verpackungsfolien, insbesondere als Zigarettenschachteleinschlag eignen.

Die Verwendung von Ethylen-Homo- oder -Copolymerisaten zum Herstellen von siegelbaren, gereckten Verpackungsfolien ist seit langem bekannt.

Es wurde auch immer wieder versucht diese Mehrschichtfolien in ihren Eigenschaften zu verbessern. So wird in der DE-C 1 161 679 ein Verfahren zur Herstellung einer aus Ethylen-Homopolymerisat aufgebauten Mehrschichtfolie mit guten Schweißfestigkeit und guter Haftverbindung zwischen den Schichten beschrieben.

In der DE-A 1 504 352 wird ein Verfahren zum Verbessern der Heißschweißbarkeit von durch Strecken orientiertem thermoplastischem Film aus Polypropylen und einem Polyethylenüberzug gelehrt, wobei beim Verschweißen die Verschlußzone der Verpackung nicht wesentlich schrumpft und somit das Aussehen und die Nahtfestigkeit nicht beeinträchtigt werden.

In der DE-A 1 504 625 werden Mehrschichtenfolien bestehend aus einer Polypropylen-Mittelschicht und je einer Polyethylenschicht als Außenschicht beschrieben.

Alle diese bekannten Mehrschichtfolien zeigen aber Schwierigkeiten bei ihrem Einsatz auf schnellaufenden Verpackungsmaschinen, insbesondere auf schnellaufenden Zigarettenschachtel-Einschlagmaschinen. Insbesondere treten bei den hohen Abpackgeschwindigkeiten fehlerhafte Siegelnähte, Fehleinschläge, die Unterbrechungen zur Folge haben, und Beläge auf den Maschinenteilen durch Abrieb auf.

In den bekannten Folien werden weitgehend Fettsäureamide zur Verbesserung der Gleitfähigkeit eingesetzt, die jedoch nicht die gute Maschinengängigkeit an schnelllaufenden Maschinen zeigen. Auch die in der DE-A 2 225 703 beschriebene Zugabe eines unverträglichen thermoplastischen Harzes bringt nicht den gewünschten Erfolg.

Es stellte sich daher die Aufgabe eine Mehrschichtfolie mit sehr guter Gleitfähigkeit und Maschinengängigkeit bereitzustellen, die sich besonders als Zigarettenschachteleinschlag eignet.

Erfindungsgemäß gelang dies durch eine siegelbare, zumindest monoaxial gereckte Mehrschichtfolie bestehend aus wenigstens einer Polypropylenfolie und wenigstens einer siegelbaren Schicht aus Polyethylen oder einem Ethylencopolymerisat mit wenigstens 4 Gew.-% Ethylen, die dadurch gekennzeichnet ist, daß die siegelbare Schicht eine Additivkombination bestehend aus

1. 0,3-1,0 Gew.-%, vorzugsweise 0,4-0,7 Gew.-%, bezogen auf die siegelbare Schicht, eines langkettigen aliphatischen Amins,

2. 0,1-0,7 Gew.-%, vorzugsweise 0,15-0,50 Gew.-%, bezogen auf die siegelbare Schicht, eines dispergierten mit dem Polyethylen bzw. Ethylencopolymerisat unverträglichen, thermoplastischen Polymers mit einem Erweichungspunkt von maximal 50 °C unterhalb oder oberhalb des Erweichungspunktes des Polyethylen bzw. Ethylencopolymerisats und

3. 0,2-0,8 Gew.-%, vorzugsweise 0,3-0,6 Gew.-%, bezogen auf die siegelbare Schicht, eines Polydialkylsiloxans, enthält.

Das Polypropylen der Kernfolie ist vorzugsweise ein isotaktisches Polypropylen mit einer Dichte von 0,90 bis 0,91 g/cm$^3$ und einem Schmelzflußindex von 1 bis 4 g/10 min bei 230 °C/2,16 kg/cm$^2$ Druck (nach DIN 53 735).

Das Siegelschichtpolymere ist ein Ethylenmono- oder -copolymerisat, wobei vorzugsweise ein Polyethylen hoher Dichte oder ein statistisches Ethylen/Propylen-Copolymeres mit wenigstens 4 Gew.-% Ethylen vorzugsweise 95 Gew.-% Propylen und 5 Gew.-% Ethylen, eingesetzt wird.

Die Dichte des Siegelschichtpolymeren sollte vorzugsweise im Bereich von 0,895 bis 0,960 g/cm$^3$ liegen und einen Schmelzflußindex von 1 bis 7 g/10 min bei 190 °C/2,16 kp/cm$^2$ Druck und einen Kristallitschmelzpunkt je nach Typ im Bereich von 125 bis 148 °C (unter dem Polarisationsmikroskop), aufweisen.

Als Komponente 1) der Additivkombination werden langkettige, aliphatische tertiäre Amine, die gegebenenfalls einfach ungesättigt sind, vorzugsweise tertiäre Amine, deren aliphatischer Rest eine C-Kettenlänge von $C_{12}$ bis $C_{18}$ aufweist und die mit zwei Hydroxyalkyl-($C_1$-$C_4$)-Gruppen substituiert sind, verwendet. N,N-Bis-(2-hydroxyethyl)-($C_{12}$-$C_{16}$)-alkylamine sind besonders bevorzugt.

Das mit dem Siegelpolymeren unverträgliche thermoplastische Polymere sollte einen Erweichungspunkt im Bereich von maximal 50 °C unterhalb oder oberhalb des Erweichungspunktes des Siegelpolymeren aufweisen und im Siegelpolymeren dispergiert, vorzugsweise mit einer Teilchengröße von 0,01-4 µm, besonders bevorzugt von 0,1-2 µm, vorliegen. Die Dispergierung des unverträglichen Polymeren in der Siegelmasse erfolgt nach üblichen, bekannten Methoden. Vorzugsweise eignen sich thermoplastische Harze wie Ethylen-Methacrylsäure-Copolymere (90-99 °C), Polylaurinlactamid (180 °C), Acrylnitril-Butadien-Metacrylat-Copolymere (80 °C), Ethylenvinylalkohol-Copolymere (185 °C). Ganz besonders bevorzugt sind Ethylen/Methacrylsäurecopolymere, die gegebenenfalls ganz oder teilweise als Alkalisalze oder vorzugsweise als Zn-Salz, vorliegen können, oder Polylaurinlactam.

Das als 3. Additivkomponente verwendete Polydialkylsiloxan mit vorzugsweise $C_1$-$C_3$ in der Alkylgruppe sollte vorzugsweise eine Viskosität von mindestens 1 Mill. CSt bei 20 °C aufweisen. Polydimethylsiloxan wird ganz besonders bevorzugt eingesetzt.

Durch den Einsatz der erfindungsgemäßen Additivkombination gelingt es, Mehrschichtfolien nicht nur mit einer sehr guten Maschinengängigkeit und einer sehr guten Gleitfähigkeit herzustellen, sondern auch auf die übliche elektrische Vorbehandlung der Folie zu verzichten, die bekanntlich die Gleitwerte der Folie verschlechtert. Auch ist kein Zerkratzen oder Eintrüben der Folie, wie es bei Abstandshaltern auf Basis anorganischer Pulver auftritt, zu beobachten. Überraschenderweise tritt auch keine Beeinträchtigung der Beklebbarkeit der Folie auf, z.B. mit einem Aufreißstreifen zusammen, obwohl dies beim Einsatz von Polyalkylsiloxanen zu befürchten war.

Es war daher nicht zu erwarten, daß mit der erfindungsgemäßen Additivkombination die gewünschte Verbesserung der bekannten Mehrschichtfolien erreicht wird, zumal auch der Einsatz bekannter Gleitmittel, wie z.B. gesättigte oder ungesättigte Fettsäureamide sowie höhermolekulare substituierte Fettsäureamide mit Schmelzpunkten zwischen 70 und 150 °C, wie z.B. Erucasäureamide, Ölsäureamid, Alkyl-Di-Fettsäureamide, N,N-Polyethoxylierte Fettsäureamide keine ausreichende Gleitfähigkeit auf den schnellaufenden Verpackungsmaschinen bringt.

Ein weiterer Gegenstand der Erfindung ist daher die Verwendung der erfindungsgemäßen Mehrschichtfolien, insbesondere einer Mehrschichtfolie aus einer Polypropylenschicht und 2 siegelbaren Schichten, als Verpackungsfolien, insbesondere als Zigaretteneinschlag.

Das Herstellen und die Verarbeitung der Siegelschicht-Formmasse, d.h. die Dosierung und die Einarbeitung der Additive in das Siegelschichtpolymere und weiter das Zusammenführen dieser Formmasse mit der Polypropylen-Kernfolie kann nach üblichen Verfahren wie Laminierung oder Schmelzextrusion erfolgen.

Vorteilhaft ist die direkte Zugabe der Additive, so daß eine aufwendige Additiv-Masterbatch-Technik vermieden wird.

Weiterhin ist es vorteilhaft, die Formmasse getrennt von der Polypropylen-Filmextrusion in einer späteren Stufe des Reckprozesses auf die Kernfolie aufzubringen.

Vorteilhafterweise ist die Kernfolie biaxial und sind die Siegelfolien zumindest monoaxial gereckt.

Für die biaxiale Reckung können die üblichen Reckverfahren verwendet werden. In der erfindungsgemäßen Mehrschichtfolie sollte die Polypropylenkernfolie vorzugsweise eine Dicke von 10-50 μm und die Siegelschicht eine von 0,8-2 μm, besonders bevorzugt von 1 μm, aufweisen.

Die erfindungsgemäßen Mehrschichtfolien können auch bedruckt und mit Aufreißstreifen versehen werden.

## Prüfmethoden

Der Verpackungslauf wird nach den vom Maschinenpersonal aufgestellten Kriterien wie Vorschub, Einschlag und Abriebfreiheit beurteilt. Treten keine Störungen hinsichtlich dieser Merkmale beim Abpacken in der höheren Geschwindigkeitsstufe auf, erfüllt die Folie die Anforderungen. Schon eine gelegentliche Störung bedeutet, daß die Folie ungeeignet ist. Es wird vorausgesetzt, daß Störungen durch gute Einstellung des Packautomaten vor dem Versuchslauf ausgeschlossen werden.

Die Siegelfestigkeit einer Naht wird manuell festgestellt. Sie ist ausreichend, wenn bei scherender Belastung der Siegelnaht ein deutlicher Kraftaufwand notwendig ist, um die Naht zu zerstören. Die Siegelnahtfestigkeit ist auch gut, wenn die Verpackungsfolie bei gleicher Belastung außerhalb der Siegelnaht reißt.

Die Klarsicht wird anhand der fertigen Packungen visuell beurteilt. Zu einer befriedigenden Klarsicht einer Packung kommt man, wenn man das Druckbild ohne Trübung erkennen kann. Der Verlust der Klarsicht wird an dunklen Druckbildern besonders deutlich.

Der Aschetest wird nach einer gewissen Aufladung der Folie — durch dreimaliges Reiben mit einem Wolltuch in einer Richtung — vorgenommen. Der Aschetest ist negativ, wenn Zigarettenasche aus ca. 3 cm Entfernung von einer aufgeladenen Folie angezogen wird.

## Beispiel 1

In
98,7 Gew.-% eines Polyethylens mit der Dichte 0,954 g/cm³, mit dem Schmelzindex von 3 g/10 min. bei 190 °C/2,16 kp/cm² und dem Kristallitschmelzbereich von 128-133 °C werden bei Masse Temperaturen von ca. 225 °C,
0,5 Gew.-% N,N-Bis (2-hydroxyethyl)-amin,
0,5 Gew.-% eines Ethylen-Methacrylsäure-Copolymeren, bei dem die Carboxyl-Gruppen teilweise über Zn-Salze vorliegen, mit der Dichte von 0,936 g/cm³, mit dem Schmelzindex von 5 g/10 min. bei 190 °C/1 kp/cm² und dem Schmelzpunkt von 99 °C und
0,3 Gew.-% eines Polydimethylsiloxans der Dichte von 0,985 g/cm³ bei 20 °C und einer Viskosität von 1 Million cSt bei 20 °C durch Mischextrudieren eingearbeitet.

Diese Formmasse wird nach einem üblichen Verfahren auf eine Polypropylen-Kernfolie beidseitig aufgebracht und mit ihr verstreckt. Die Kernfolie besteht aus Polypropylen der Dichte 0,905 g/cm³, mit dem Schmelzindex von 2 g/10 min. bei 230 °C/2,16 kp/cm² und dem Erweichungsbereich von 160-166 °C.

Die daraus entstandene Mehrschichtfolie hat folgenden Aufbau : 1μm Siegelschicht/19μm Kernfo-

lie/1 μm Siegelschicht.

Der Vorschub der Folienabschnitte in Packstellung einer mit 265 Packungen/Minute schnellaufenden Einschlagmaschine erfolgt störungsfrei.

Die Siegelung bei Temperaturen zwischen 138 bis 143 °C führt zu festen Siegelnähten.

Der Einschlag ist einwandfrei.Durch Variation der Maschinen-Falter bleibt die gute Faltung erhalten.

Der Maschinenlauf erfolgt über mehrere Stunden störungsfrei. Abrieb an Siegelwerkzeugen, Formatblechen oder Umlenkwalzen tritt nicht auf.

Die Klarsicht der Packung ist gut, d.h. das unter der Verpackungsfolie liegende Druckbild ist ohne Trübung zu erkennen.

Die antistatische Wirkung ist durch den Aschetest nachweisbar.

Die Ergebnisse sind in Tabelle 1 zusammengefaßt.

## Beispiel 1a (Vergleichsbeispiel)

Die Siegelschicht-Formmasse ist wie in Beispiel 1 aufgebaut. Auch die Herstellung und der Dickenaufbau entsprechen denen des Beispiels 1.

Die Mehrschnichtfolie wird aber durch Corona-Entladung elektrisch behandelt, so daß die antistatische Wirkung nicht nur durch den Aschetest, sondern auch durch die Meßmethode nach Shishido (Halbwertzeit der Entladung) deutlich feststellbar ist.

Diese so behandelte Folie wird von der Verpackungsmaschine nicht störungsfrei eingezogen, da die Gleitung der Folie schwieriger ist. Das gleiche gilt für den Einschlag der Packung. Die bessere Antistatik der Folie kommt nicht zur Wirkung.

## Beispiel 2

Für die Siegelschicht wird die Zusammensetzung wie folgt geändert :

98,5 Gew.-% eines Ethylen/Propylen-Copolymerisats mit 4,5 Gew.-% Ethylen mit der Dichte 0,901 g/cm$^3$, dem Schmelzindex von 2 g/10 min. bei 190 °C/2,16 kp/cm$^2$ und dem Erweichungsbereich von 142 bis 148 °C, werden mit

0,5 Gew.-% eines Amins wie in Beispiel 1 sowie

0,5 Gew.-% eines thermoplastischen Polymers wie in Beispiel 1 und

0,5 Gew.-% eines Polydimethylsiloxans wie in Beispiel 1 vermischt.

Diese Formmasse wird nach üblichen Verfahren auf eine Polypropylen-Kernfolie aufgebracht und mit ihr verstreckt.

Die Mehrschichtfolie hat hinsichtlich ihrer Dicke den gleichen Aufbau wie in Beispiel 1.

Die Folie verhält sich auf schnellaufenden Verpackungsmaschinen bei 265 Packungen/Minute sehr gut wie man Tabelle 1 entnehmen kann.

## Beispiel 3

Aus

99,0 Gew.-% des Ethylenhomopolymerisats gemäß Beispiel 1 und

0,5 Gew.-% des Amins wie in Beispiel 1

0,2 Gew.-% Polylaurinlactam mit dem Schmelzbereich von 176-180 °C und

0,3 Gew.-% des Polydimethylsiloxans wie in Beispiel 1 wird die Siegelformmasse hergestellt.

Diese Formmasse wird wie in den vorhergegangenen Beispielen nach üblichen Verfahren auf eine Polypropylen-Kernfolie gebracht und mit ihr verstreckt.

Die Mehrschichtfolie hat die gleiche Dickenverteilung wie in Beispiel 1.

Die Folie verhält sich auf schnellaufenden Verpackungsmaschinen bei 265 Packungen/Minute sehr gut. Die Siegeltemperatur liegt bei 146 °C. Die Ergebnisse der Prüfung der Mehrschichtfolie sind in Tabelle 1 zusammengestellt.

(Siehe die Tabelle Seite 5)

# 0 027 586

## Tabelle

| Beispiel | 1 | 2 | 3 | 1a |
|---|---|---|---|---|
| Siegelschicht | Gew.-% | Gew.-% | Gew.-% | Gew.-% |
| Polyethylen | 98,7 | | 99,0 | 98,7 |
| Ethylen/Propylen-$C_2$-4 % | | 98,5 | | |
| Copolymer | | | | |
| Additive | | | | |
| aliphat. Amin | 0,5 | 0,5 | 0,5 | 0,5* |
| Ethylen-Methacryls.-Copolymer | 0,5 | 0,5 | | 0,5 |
| Polylaurinlactam | | | 0,2 | |
| Polydialkyl-Siloxan | 0,3 | 0,5 | 0,3 | 0,3 |
| Verpackungslauf | | | | |
| Vorschub | sehr gut | sehr gut | sehr gut | gestört |
| Siegelfestigkeit | sehr gut | sehr gut | sehr gut | sehr gut |
| Einschlag | sehr gut | sehr gut | sehr gut | unbefr. |
| Maschinenlauf insgesamt | sehr gut | sehr gut | sehr gut | gestört |
| Klarsicht | sehr gut | sehr gut | sehr gut | sehr gut |
| Antistatik | ausr. | ausr. | ausr. | gut |

\* Folie elektrisch vorbehandelt.

## Ansprüche

1. Siegelbare Mehrschichtfolie bestehend aus zumindest einer Polypropylenfolie und wenigstens einer siegelbaren Schicht aus Polyethylen oder einem Ethylencopolymerisat mit wenigstens 4 Gew.-% Ethylen, dadurch gekennzeichnet, daß die siegelbare Schicht eine Additivkombination bestehend aus
   1) 0,3-1 Gew.-%, bezogen auf die siegelbare Schicht, eines langkettigen aliphatischen Amins,
   2) 0,1-0,7 Gew.-%, bezogen auf die siegelbare Schicht, eines dispergierten mit dem Polyethylen bzw. Ethylencopolymerisat, unverträglichen, thermoplastischen Polymers mit einem Erweichungspunkt im Bereich von maximal 50 °C unterhalb oder oberhalb des Erweichungspunktes des Polyethylen bzw. Ethylencopolymerisats und
   3) 0,2-0,8 Gew.-%, bezogen auf die siegelbare Schicht, eines Polydialkylsiloxans, enthält.

2. Mehrschichtfolie nach Anspruch 1, dadurch gekennzeichnet, daß die Additivkombination aus 0,4 -0,7 Gew.-% der Komponente 1, 0,15-0,5 Gew.-% der Komponente 2, und 0,3 -0,6 Gew.-% der Komponente 3, besteht.

3. Mehrschichtfolie nach Ansprüchen 1 und 2, dadurch gekennzeichnet, daß als Komponente 1, ein N,N-Bis (hydroxyalkyl)-($C_{12}$-$C_{16}$)-alkylamin eingesetzt wird.

4. Mehrschichtfolie nach Ansprüchen 1-3, dadurch gekennzeichnet, daß als Komponente 1, N,N-Bis-(2- hydroxyethyl)-($C_{12}$-$C_{16}$)-alkylamin verwendet wird.

5. Mehrschichtfolie nach Ansprüchen 1-4, dadurch gekennzeichnet, daß als Komponente 2, ein Ethylenmethacrylsäure-, Acrylnitril- Butadien- Methacrylat-, Ethylen-Vinylalkohol-Copolymeres oder Polylaurinlactam eingesetzt wird.

6. Mehrschichtfolie nach Ansprüchen 1-5, dadurch gekennzeichnet, daß als Komponente 3, ein Polydialkylsiloxan mit einer Viskosität von mindestens 1 Mill. cSt bei 20 °C verwendet wird.

7. Mehrschichtfolie nach Ansprüchen 1-6, dadurch gekennzeichnet, daß Polydimethylsiloxan als Komponente 3, eingesetzt wird.

8. Mehrschichtfolie nach Anspruch 1-7, dadurch gekennzeichnet, daß die Kernfolie biaxial und die Siegelschicht zu mindest monoaxial gereckt ist.

9. Verwendung der Mehrschichtfolie nach Ansprüchen 1-8 als Verpackungsfolie.

10. Verwendung der Mehrschichtfolie nach Ansprüchen 1-8 als Zigarettenschachteleinschlag.

## Claims

1. Sealable multilayer film consisting of at least one polypropylene film and at least one sealable layer of polyethylene or of an ethylene copolymer containing at least 4 % by weight of ethylene, characterised in that the sealable layer contains and additive combination comprising
   1) 0.3-1 % by weight, relative to the sealable layer, of a long-chain aliphatic. amine,

5

2) 0.1-0.7 % by weight, relative to the sealable layer, of a dispersed thermoplastic polymer which is incompatible with the polyethylene or ethylene copolymer and has a softening point in the range of not more than 50 °C below or above the softening point of the polyethylene or ethylene copolymer and

3) 0.2-0.8 % by weight, relative to the sealable layer, of a polydialkylsiloxane.

2. Multilayer film according to Claim 1, characterised in that the additive combination comprises 0.4 -0.7 % by weight of component 1,
0.15-0.5 % by weight of component 2, and
0.3 -0.6 % by weight of component 3.

3. Multilayer film according to Claims 1 and 2, characterised in that an N,N-bis (hydroxyalkyl)-($C_{12}$-$C_{16}$)-alkylamine is employed as component 1.

4. Multilayer film according to Claims 1-3, characterised in that N,N-bis-(2-hydroxyethyl)-($C_{12}$-$C_{16}$)-alkylamine is used as component 1.

5. Multilayer film according to Claims 1-4, characterised in that an ethylene/methacrylic acid, acrylonitrile/butadiene/methacrylate, ethylene/vinyl alcohol copolymer or polylauric lactam is used as component 2.

6. Multilayer film according to Claims 1-5, characterised in that a polydialkylsiloxane with a viscosity of at least 1 million CST at 20 °C is used as component 3.

7. Multilayer film according to Claims 1-6, characterised in that polydimethylsiloxane is used as component 3.

8. Multilayer film according to Claims 1-7, characterised in that the core film is stretched biaxially and the sealing layer at least monoaxially.

9. Use of the multilayer film according to Claims 1-8 as a packaging film.

10. Use of the multilayer film according to Claims 1-8 as a wrapping for packs of cigarettes.

**Revendications**

1. Feuille soudable à plusieurs couches consistant en au moins une feuille de polypropylène et au moins une couche soudable en polyéthylène ou en un copolymère de l'éthylène à au moins 4 % en poids d'éthylène, caractérisée en ce que la couche soudable contient une combinaison d'additifs consistant en :

1) 0,3 à 1 % en poids, par rapport à la couche soudable, d'une amine aliphatique à longue chaîne,

2) 0,1 à 0,7 % en poids, par rapport à la couche soudable, d'un polymère thermoplastique dispersé incompatible avec le polyéthylène ou le copolymère de l'éthylène, dont le point de ramollissement se situe dans l'intervalle de 50 °C au maximum au-dessous ou au-dessus du point de ramollissement du polyéthylène ou du copolymère de l'éthylène, et

3) 0,2 à 0,8 % en poids, par rapport à la couche soudable, d'un polydialkylsiloxanne.

2. Feuille à plusieurs couches selon la revendication 1, caractérisée en ce que la combinaison d'additifs consiste en :
0,4 à 0,7 % en poids du composant 1,
0,15 à 0,5 % en poids du composant 2, et
0,3 à 0,6 % en poids du composant 3.

3. Feuille à plusieurs couches selon les revendications 1 et 2, caractérisée en ce que l'on utilise en tant que composant 1 une N,N-bis-(hydroxyalkyl)-alkylamine en C 12-C 16.

4. Feuille à plusieurs couches selon les revendications 1 à 3, caractérisée en ce que l'on utilise en tant que composant 1 une N,N-bis-(2-hydroxyéthyl)-alkylamine en C 12-C 16.

5. Feuille à plusieurs couches selon les revendications 1 à 4, caractérisée en ce que l'on utilise en tant que composant 2 un copolymère éthylène-acide méthacrylique, acrylonitrile-butadiène-méthacrylate, éthylène-alcool vinylique ou du polylaurolactame.

6. Feuille à plusieurs couches selon les revendications 1 à 5, caractérisée en ce que l'on utilise en tant que composant 3 un polydialkylsiloxanne présentant une viscosité d'au moins 1 million de cSt à 20 °C.

7. Feuille à plusieurs couches selon les revendications 1 à 6, caractérisée en ce que l'on utilise en tant que composant 3 un polydiméthylsiloxanne.

8. Feuille à plusieurs couches selon les revendications 1 à 7, caractérisée en ce que la feuille de cœur est soumise à étirage biaxial et la couche soudable à étirage au moins mono-axial.

9. Utilisation de la feuille à plusieurs couches selon les revendications 1 à 8 comme feuille d'emballage.

10. Utilisation de la feuille à plusieurs couches selon les revendications 1 à 8 pour l'emballage de paquets de cigarettes.